# FASCICULE DE BREVET EUROPEEN

(11) **EP 1 868 346 B1**
(45) Date de publication et mention de la délivrance du brevet: **27.10.2010**
(21) Numéro de dépôt: 07109910.5
(22) Date de dépôt: 08.06.2007
(51) Int. Cl.: H04L 29/06

(54) **Détection de boucles au sein d'un élement intermédiaire de signalisation SIP**
Erfassung von Schleifen in einem SIP-Signalisierungszwischenelement
Detection of loops within an intermediate SIP signalling element

(30) Priorité: 16.06.2006 FR 0652162
(43) Date de publication de la demande: 19.12.2007
(73) Titulaire: Alcatel Lucent, 75008 Paris (FR)
(72) Inventeur: Froment, Thomas, 91310, LONGPONT SUR ORGE (FR); Lebel, Christophe, 44115, HAUTE GOULAINE (FR)
(74) Mandataire: Chaffraix, Sylvain

(56) Documents cités:
- ROSENBERG ET AL: "RFC 3261: SIP: Session Initiation Protocol" IETF REQUEST FOR COMMENTS, juin 2002 (2002-06), pages 1-269, XP002323877

## Description

La présente invention est relative à la signalisation pour l'établissement de sessions multimédia sur des réseaux de communication à paquets, et concerne plus particulièrement l'utilisation du protocole SIP (Session *Initiation* Protocol) sur de tels réseaux.

L'invention trouve notamment une application dans les architectures de réseau de type IMS *(Internet Multimedia Subsystem)* telles que définies par les organismes de standardisation 3GPP et TiSpan, qui préconisent le protocole SIP comme protocole exclusif de signalisation.

Ce protocole SIP est décrit par la RFC 3261 de l'IETF (*Internet Engineering Task* Force). Son but est de permettre l'établissement et le contrôle (modification, terminaison...) d'une session multimédia sur un réseau de communication à paquets, fonctionnant sur une pile protocolaire IP (*Internet* Protocol). Il permet à deux parties d'une session multimédia de s'authentifier, de se localiser et éventuellement de négocier le type de médias qui peut être utilisé pour le transport de la session proprement dite.

D'autres protocoles existent ayant des objectifs similaires, tels MGCP ou H.323, établi par l'ITU *(International Telecommunication Union),* mais le protocole SIP est désormais en passe de devenir prépondérant, notamment du fait de son choix par le 3GPP comme protocole de signalisation pour les architectures IMS.

Le protocole SIP reconnaît essentiellement deux types d'éléments dans un réseau de communication : les « agents utilisateurs » (« *user agents »* en langue anglaise) et les « *éléments intermédiaires »* (« *SIP proxy* »). Les agents utilisateurs sont principalement des terminaux, comme des micro-ordinateurs, des téléphones SIP, des assistants personnels numériques (ou PDA selon la traduction anglaise « *Personal Digital Assistant* »).

Ces terminaux possèdent une adresse IP (*Internet Protocol*) qui permet de les localiser « physiquement » et d'acheminer des messages ; et également un identifiant universel de ressources URI ( pour « *Uniform Resource Identifer* ») qui est un identifiant plus abstrait et permet de repérer un terminal indépendamment de son adresse physique IP.

Si un terminal appelant connaît l'adresse IP du terminal qu'il souhaite appeler, il peut initier la session en lui envoyant une requête SIP vers son adresse IP. Mais dans le cas général, les terminaux ne se connaissent mutuellement que par leur identifiant uniforme de ressource URI.

Un deuxième type d'élément de réseau est l'élément intermédiaire SIP ou proxy SIP. De façon classique, les messages SIP transitent par ces éléments intermédiaires qui ont pour tâche principale d'effectuer les associations entre les adresses IP et les identifiants universels de ressources URI : ainsi, le terminal émetteur transmet un message vers l'URI du terminal appelé, et le ou les éléments intermédiaires, ayant accès aux associations entre adresses IP et URI, sont à même d'acheminer le message vers le terminal appelé.

Un autre rôle des éléments intermédiaires SIP est de faire appel à des serveurs d'applications. Ces applications peuvent être de types fort différents. À titre d'exemples, on peut citer les applications de facturation, les applications de contrôle d'appel (filtrage, renvoi d'appel, boites vocales etc.), jeux, applications de convergence permettant de faire interagir plusieurs protocoles...

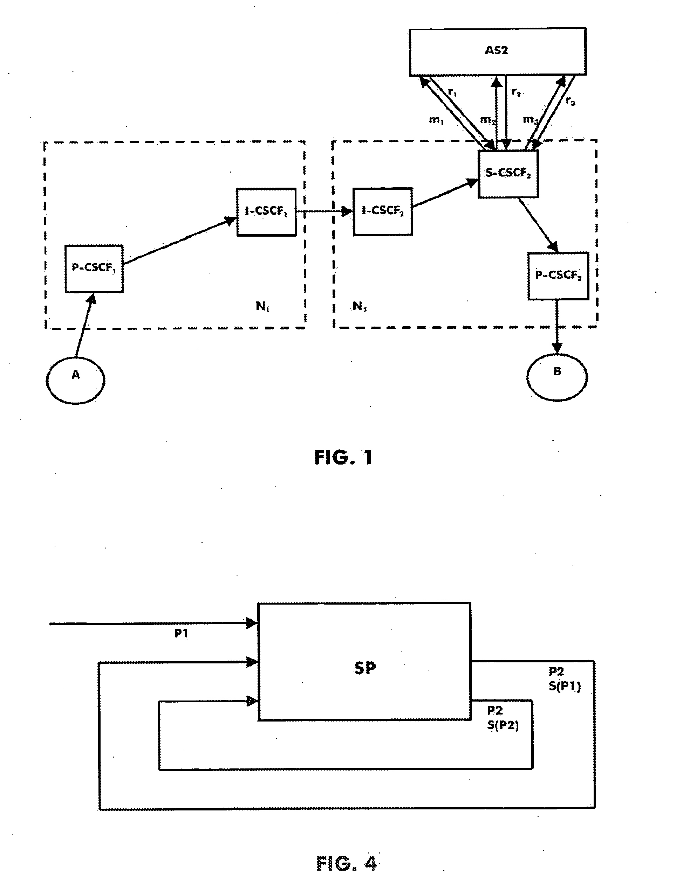

La figure 1 illustre une architecture typique de type IMS (*Internet Multimedia Subsystem*) comportant deux réseaux N₁ et N₂. Au premier est connecté un terminal A, et au second un terminal B.

Les terminaux A et B sont connectés à leurs réseaux respectifs par des éléments intermédiaires P-CSCF₁ et P-CSCF₂ respectivement. Les éléments intermédiaires P-CSCF (pour « *Proxy - Call Session Control Function* ») a pour rôle principal de fournir des points d'entrées aux terminaux.

Les deux réseaux N₁ et N₂ comportent également des éléments intermédiaires I-CSCF₁ et I-CSCF₂ (pour « *Interrogating - Call Session Control* Function »), respectivement, dont le but est de fournir des interfaces vers les autres réseaux de communication ; ainsi que des éléments intermédiaires S-CSCF₁ et S-CSCF₂ (pour «*Serving - Call Session Control Function* »), respectivement, pour permettre l'interfaçage du réseau de télécommunication avec un ou plusieurs serveurs d'application AP₂, comportant différents types de services, ainsi qu'évoqué précédemment.

Une requête SIP est émise par le terminal A afin d'établir une session avec le terminal B. Cette requête SIP est une requête « Invite », comportant l'identifiant Universel de ressources URI du terminal B. Cette requête est transmise à l'élément fonctionnel P-CSCF₁ qui est le seul point d'entrée connu du terminal A. Celui-ci détermine que le terminal B n'est pas dans le réseau de communication N₁ et il transmet donc la requête à l'élément fonctionnel I-CSCF₁ qui lui-même la transmet à son alter-ego I-CSCF₂ dans le réseau de communication N₂. Ce dernier transmet la requête SIP vers l'élément fonctionnel S-CSCF₂ afin que soient mis en oeuvres les (éventuels) services prévus pour le terminal B (paiement, filtrage, renvoi d'appel etc.).

Pour chaque service prévu, une requête SIP modifiée est transmise vers le serveur d'applications AP₂. Dans l'exemple de la figure 1, trois requêtes m₁, m₂, m₃ sont transmises, générant trois réponses du serveur d'applications r₁, r₂, r₃.

Les réseaux de communication tendant à se complexifier, notamment du fait du nombre croissant de terminaux susceptibles de se connecter et de services disponibles, la signalisation SIP tend également à devenir plus nombreuse et plus difficile à maîtriser.

Dans certains cas de figure, il peut arriver qu'un message SIP passe plusieurs fois par un même élément intermédiaire sans être modifié. Il est important de distinguer ce phénomène que l'on appelle généralement « boucle », de la spirale. Dans une spirale, le message SIP repasse également plusieurs fois par un même élément intermédiaire, mais il est modifié à chaque passage. Ainsi, la situation illustrée par la figure 1 où des messages SIP m₁, m₂, m₃, r₁, r₂, r₃ sont échangés entre l'élément intermédiaire S-CSCF₂ et le serveur d'applications AP₂ est un cas classique de spirale.

La spirale est un comportant normal de la signalisation SIP, mais les boucles sont des phénomènes anormaux.

La RFC 3261 donne des définitions de ces phénomènes de boucles et de spirales, au paragraphe 6 « *Definitions* ».

La RFC 3261, précédemment cité, avait prévu la possibilité de mettre en oeuvre des moyens de détection de boucles par les éléments intermédiaires, dans les paragraphes 16.3 et 16.6.

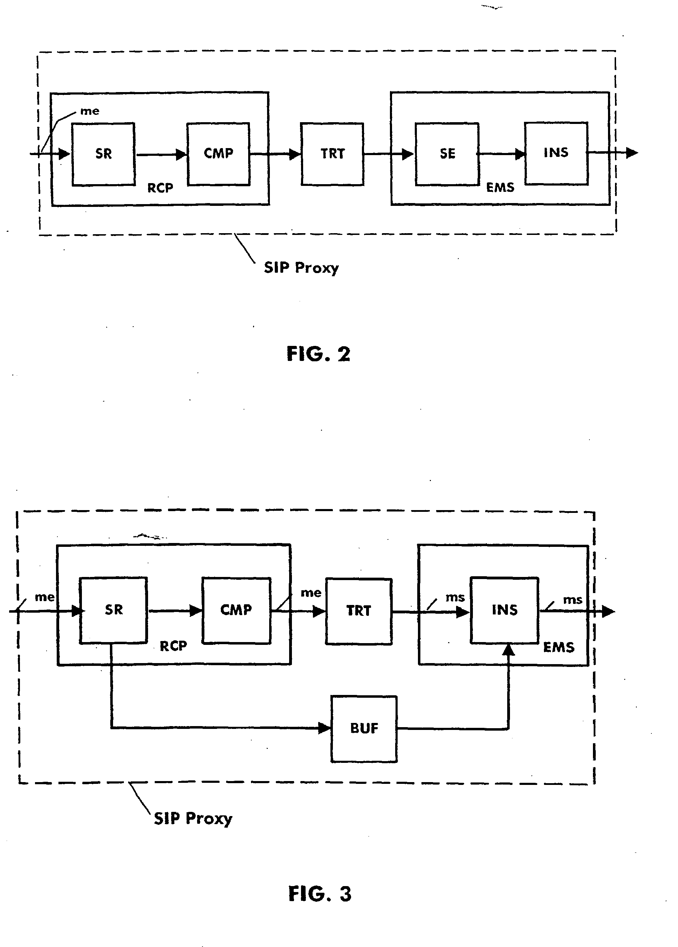

Le principe exposé est schématisé par la figure 2.

L'élément intermédiaire SIP Proxy comporte des moyens de réception RCP de messages de signalisation entrants « me », des moyens de traitement TRT pour fournir des messages de signalisation sortants « ms » à partir desdits messages de signalisation entrant « me » en éventuellement modifiant certains de leurs paramètres et des moyens d'émission EMS pour re-émettre les messages de signalisations sortants (ms) vers le réseau de communication.

La détection de boucle est réalisée en incorporant dans les moyens de réception et dans les moyens de réception deux modules SR et SE pour calculer des signatures sur un ensemble de paramètres des messages entrants (me) et sortants (ms), respectivement.

En sortie du module SR, les moyens de réception dispose d'un module CMP pour comparer le résultat du calcul de signature à une valeur insérée dans un paramètre particulier du message entrant.

Si la signature calculée est égale à cette valeur, cela signifie que ce message a déjà été reçue à l'identique et qu'il se trouve dans une situation de boucle (et non de spirale). Le message entrant peut alors être détruit, et un message d'erreur de détection de boucle renvoyé vers l'émetteur.

Dans le cas contraire, le message entrant est traité, de façon connue en soi, par les moyens de traitement et transformé en un message sortant qui, dans un comportement normal, doit être différent du message entrant, par la valeur d'un ou plusieurs paramètres. Ainsi, normalement, les paramètres concernant la route à emprunter par le message doivent être modifiés.

Le module SE calcule une nouvelle signature sur la base de ces paramètres modifiés et un module d'insertion INS insère cette signature dans le paramètre particulier.

Ainsi, les boucles sont détectées par la non-évolution des paramètres des messages de signalisation (notamment ceux concernant la route à emprunter)

Toutefois ce mécanisme est considéré comme optionnel par la RFC de l'IETF. Dans la mesure où il est extrêmement coûteux en terme de ressources machines, il semble n'avoir jamais été implémenté.

En effet le mécanisme de détection de boucle préconisé par la RFC 3261 présente l'inconvénient majeur de nécessiter deux calculs de signature, dans les modules SR et SE. Ces calculs de signatures sont des opérations complexes. Comme le protocole SIP est un protocole textuel, ils nécessitent la manipulation de longues chaînes de caractères, ce qui s'avère coûteux en terme de ressources machines pour les éléments intermédiaires.

Un autre mécanisme, beaucoup plus simple, est obligatoirement mis en oeuvre, consistant à décrémenter un compteur « Max Forward » à chaque passage par un élément intermédiaire et à considérer qu'une fois ce compteur épuisé, le message doit effectuer une boucle et interrompre sa retransmission. Ce mécanisme est également décrit dans la RFC 3261.

Mais, il a été remarqué très récemment qu'il était primordial de limiter les boucles dans la signalisation SIP et que le mécanisme du compteur d'itération était très insuffisant. Le document draft-ietf-sip-fork-loop-fix-01.txt publié en mars 2006 et disponible sur le site internet de l'IETF présente une situation dans laquelle une personne mal intentionnée peut provoquer le blocage d'un réseau de communication avec un minimum d'efforts. En effet, en enregistrant deux terminaux auprès de deux éléments intermédiaires, dans une configuration particulière, chaque message adressé à ces terminaux sera dupliqué par les éléments intermédiaires et renvoyé vers l'autre élément intermédiaire. Ce jeu de renvoi et de duplication provoque une explosion combinatoire qui n'est limitée que par le compteur «Max Forward ». Traditionnellement, ce compteur est fixé à une valeur de 80, qui présente un bon compromis entre le nombre d'éléments intermédiaires que peut être amené à prendre un message SIP, dans un comportement normal, et ce qui relève du comportement anormal de la boucle.

Avec une telle valeur, on arrive finalement à un total de 2⁷⁰ messages SIP, ce qui peut bloquer un réseau de communication pendant plusieurs heures.

Outre ce cas extrême mais possible en cas d'attaques mal-attentionnées, ce document met en lumière la vulnérabilité des architectures basées sur le protocole SIP.

Il donc primordial de mettre en oeuvre des mécanismes de détection de boucles dans les éléments intermédiaires SIP.

Le but de la présente invention est de présenter un mécanisme de détection de boucles qui présente l'avantage de nécessiter moins de ressources machines.

Plus précisément, l'invention a pour premier objet un élément intermédiaire (ou « SIP Proxy ») comportant
- des moyens de réception de messages de signalisation entrants conformes au protocole SIP et provenant d'un réseau de communication,
- des moyens de traitement pour fournir des messages de signalisation sortants à partir de ces messages de signalisation entrants en éventuellement modifiant certains de leurs paramètres, et
- des moyens d'émission pour émettre les messages de signalisation sortants sur le réseau de communication, qui comportent un mécanisme de détection de boucles consistant, pour un message de signalisation entrant, à calculer une signature à partir d'un ensemble de paramètres de celui-ci, et à détecter une boucle par la comparaison de cette signature avec des valeurs insérées dans un paramètre particulier du message de signalisation entrant.

L'élément intermédiaire de l'invention est novateur en ce que les moyens d'émission insèrent la signature dans le paramètre particulier du message de signalisation sortant correspondant au message de signalisation entrant.

Ainsi, un seul calcul de signature est effectué par les éléments intermédiaires, au sein des moyens de réception.

Celui-ci représentant la majeure partie du surcoût impliqué par la détection de boucles, le mécanisme selon l'invention permet de réduire ce surcoût de moitié.

Il devient alors possible de mettre en oeuvre un mécanisme de détection de boucles en minimisant le surcoût sur le trafic de signalisation SIP habituel.

Un deuxième objet de l'invention est une architecture de communication conforme au standard IMS, comportant une pluralité d'éléments intermédiaires de type P-CSCF, I-CSCF et S-CSCF, dans laquelle au moins un des éléments intermédiaires est conforme au premier objet de l'invention, décrit ci-dessus.

Un troisième objet de l'invention est un procédé de transmission de messages de signalisation, notamment conformes au protocole SIP, au sein d'un ensemble d'éléments intermédiaires d'un réseau de communication, consistant à ce que chacun des éléments intermédiaires traversés
- reçoit un message de signalisation entrant,
- fournit un message de signalisation sortant à partir de ce message de signalisation entrant en éventuellement modifiant certains des paramètres de celui-ci, et
- émet le message de signalisation sortant.

Un mécanisme de détection de boucle est mis en oeuvre consistant à calculer une signature à partir d'un ensemble de paramètres du message de signalisation entrant, et à détecter une boucle par la comparaison de cette signature avec des valeurs insérées dans un paramètre particulier du message de signalisation entrant.

Le procédé de l'invention se caractérise en ce que la signature est insérée dans le paramètre particulier du message de signalisation sortant correspondant au message de signalisation entrant.

L'invention et ses avantages apparaîtront de façon plus claire dans la description qui va suivre, en liaison avec les figures annexées.
La figure 1, déjà commentée, illustre une architecture de réseau de type IMS.
La figure 2, également déjà commentée, schématise le flot de données mis en oeuvre pour la détection de boucle, au sein d'un élément intermédiaire, selon l'état de l'art de la RFC 3261 de l'IETF.
La figure 3 schématise quant à elle le flot de données et une architecture fonctionnelle possible pour un élément intermédiaire selon l'invention.
La figure 4 montre un exemple de détection d'une boucle par un élément intermédiaire selon l'invention.

De façon connue en soi, un élément intermédiaire SIP-Proxy peut être fonctionnellement divisé en des moyens de réception RCP, des moyens de traitement TRT et des moyens d'émission EMS.

Les moyens de réception RCP reçoivent des messages de signalisation « me » provenant d'un réseau de communication au travers des interfaces d'entrée de l'élément intermédiaire.

Ces messages de signalisation « me » sont conformes au protocole SIP tel qu'actuellement défini par la RFC 3261 de l'IETF et par les extensions qui enrichissent ce protocole de base. Comme exemples d'extensions du protocole SIP, on peut citer la RFC 3265, « *Session Initiation Protocol (SIP)-Specific Event Notification* », et la RFC 3262, « *Reliability* of *Provisional* Responses *in the Session Initiation* Protocol (SIP) ».

Les moyens de réception RCP comportent un module SR de calcul d'une signature à partir d'un ensemble de paramètres des messages de signalisation entrants.

Cet ensemble de paramètres est fourni par la RFC 3261. Il s'agit :
- de l'étiquette (ou « tag » en langue anglaise) des paramètres « From » et « To » qui identifient les noms logiques de l'émetteur et du destinataire du message de signalisation.
- Du paramètre « Call ID » qui identifie une session entre deux parties.
- Du paramètre « Route » qui donne le chemin à suivre pour acheminer le message jusqu'à sa destination finale.
- Du paramètre « Request URI » qui donne l'identifiant universel de ressource URI du destinataire. En l'absence d'un paramètre « Route », c'est en modifiant à chaque saut ce paramètre par la valeur correspondant au prochain élément intermédiaire à atteindre, que le routage est réalisé et que de proche en proche, le message atteint sa destination finale.
- Le paramètre CSeq qui indique un numéro d'ordre du message de signalisation au sein d'une session.
- Les paramètres « Proxy require » et « proxy authorization » qui respectivement servent à la négociation de services et d'authentification entre deux éléments intermédiaires ou un élément intermédiaire et un serveur d'applications.
- Et le dernier paramètre « Via » de la liste, qui comporte des informations sur l'élément intermédiaire précédent.

Ces paramètres ne sont pas plus décrits ici, mais l'homme du métier est à même de consulter la RFC 3261, ainsi que toute autre documentation sur le protocole SIP, afin de mieux comprendre le contenu et l'usage de ces différents paramètres.

Le paramètre « Via » toutefois mérite une étude plus approfondie. Chaque élément intermédiaire ajoute un nouveau paramètre «Via » comportant au moins l'adresse à laquelle il veut recevoir une réponse, et un identificateur unique (« *branch* ») qui lui permettra de corréler la réponse avec le message envoyé. Cet identificateur unique est partiellement généré de façon aléatoire.

Il y a donc dans un message de signalisation, une liste de paramètre « Via ». Le dernier de la liste correspond au dernier élément intermédiaire par lequel est passé le message de signalisation.

Un exemple de message de signalisation SIP (ou de début de message de signalisation SIP) est donné ci-dessous:
INVITE sip:bob@biloxi.example.com SIP/2.0
Via: SIP/2.0/TCP ss1 .atlanta.example.com:5060;branch=z9hG4bK2d4790.1
Via: SIP/2.0/TCP client.atlanta.example.com:5060;branch=z9hG4bK74bf9;
received=192.0.2.101
Max-Forwards: 69
Record-Route: <sip:ss1.atlanta.example.com;lr>
From: Alice <sip:alice@atlanta.example.com>;tag=9fxced76sl
To: Bob <sip:bob@biloxi.example.com>
Call-ID: 3848276298220188511@atlanta.example.com
CSeq: 2 INVITE
Contact: <sip:alice@client.atlanta.example.com;transport=tcp>

Selon la RFC 3261, le dernier paramètre « Via » de la liste doit être pris dans son intégralité. Mais cette étude plus approfondie permet de remarquer que l'identificateur unique doit être retiré de l'ensemble des paramètres à considérer : celui-ci étant en partie généré de façon aléatoire, il sera chaque fois différent. Or un message qui ne serait modifié que par la valeur de ce paramètre « branch » serait dans une situation de boucle. Aussi, l'algorithme proposé par la RFC 3261 ne permet pas de détecter une boucle, et doit être modifié.

Selon une mise en oeuvre de l'invention, l'ensemble de paramètres à considérer comporte le dernier paramètre « Via » de la liste, à l'exclusion de cet identificateur unique aléatoire.

En outre, préférentiellement, cet ensemble de paramètres doit consister en l'ensemble des paramètres indiqués ci-dessus, mais il est encore possible d'ajouter à cette liste tout autre paramètre défini par des extensions du protocole SIP et influant sur le routage des messages SIP au sein d'un

Des travaux plus récents, intervenus après la date de priorité de la présente demande, ont précisé la liste à prendre en compte pour le calcul de la signature. Ces travaux sont actuellement exposés dans le draft IETF « draft-ietf-sip-fork-loop-fix-04.txt » qui est en passe de devenir un RFC (Request for Comment).

Ce document rend au demeurant obligatoire la mise en oeuvre d'un mécanisme de détection de loupe par calcul de signature et rendra donc encore plus cruciale la problématique exposée précédemment.

Selon une mise en oeuvre de l'invention l'ensemble de paramètres est donc conforme au « draft-ietf-sip-fork-loop-fix-04.txt » (et au RFC subséquent).

À partir de cet ensemble de paramètres, une signature est ensuite calculée. Une signature est une donnée réduite représentative de cet ensemble de paramètres. Pour un ensemble de paramètres identiques, la signature sera toujours la même, de sorte qu'il suffit de s'intéresser aux valeurs de la signature pour tirer des conclusions sur l'évolution de l'ensemble des paramètres.

Ce calcul est typiquement conforme à la RFC 1321 de l'IETF, intitulé « MD5 - Message Digest Algorithm 5 ». La signature est alors une chaîne hexadécimale représentative de l'ensemble des paramètres pris en considération.

Un module CMP a alors pour but de comparer cette signature avec une liste de valeur insérée dans un paramètre particulier du message de signalisation entrant « me ».

Ce paramètre particulier peut être le paramètre « branch » du paramètre « Via », et la valeur peut être insérée dans ce paramètre à un emplacement bien déterminé, par exemple à la suite de l'identificateur évoqué précédemment et séparé de celui-ci par un tiret.

Si ces deux valeurs sont égales, cela signifie que le message de signalisation entrant « me » n'a pas été modifié depuis son dernier traitement par un élément intermédiaire. Puisque l'ensemble des paramètres pris en considération comprend les adresses de l'élément fonctionnel destinataire du message, cela signifie que le dernier traitement a été effectué par le même élément intermédiaire que celui qui le considère à nouveau. Nous sommes donc dans une situation de boucle.

Le message de signalisation entrant « me » peut alors être détruit, et un message d'erreur peut être envoyé vers l'émetteur. Il peut s'agir par exemple d'un message d'erreur de type 482 (« Loop Detected »).

Si la signature et la valeur insérée dans un paramètre particulier du message de signalisation entrant « me » sont différentes, il ne s'agit pas d'une situation de boucle, et le message de signalisation entrant est envoyé aux moyens de traitement TRT. Parallèlement, la signature est mémorisée dans une mémoire BUF.

Le traitement effectué par le module de traitement TRT est conforme à l'état de la technique et à l'enseignement de la RFC 3261.

Les messages de signalisation entrants sont normalement modifiés pour donner des messages de signalisation sortants ms. Les modifications portent sur les paramètres liés au routage des messages de signalisation : en effet, le mécanisme inhérent au protocole SIP consiste, comme nous l'avons vu précédemment, à modifier à chaque saut certains paramètres afin d'acheminer le message de signalisation vers sa destination finale.

Aussi, la non-modification de l'ensemble des paramètres peut être vue comme un comportement anormal de boucle.

Les messages de signalisation sortants (ms) sont ensuite transmis à des moyens d'émission EMS. Ces moyens d'émission comportent essentiellement un module d'insertion INS ayant pour objet d'insérer la signature mémorisée dans la mémoire BUF dans le paramètre particulier du message de signalisation sortant correspondant au message de signalisation entrant à partir duquel elle a été calculée.

Le paramètre particulier et l'endroit précis au sein de ce paramètre particulier est identique à celui utilisé pour la comparaison par le module de comparaison CMP.

Par rapport à l'état de la technique présenté par la RFC 3261, un unique calcul de signature est réalisé par l'élément intermédiaire. Cela est rendu possible par le fait que le calcul réalisé en entrée est utilisé pour l'insertion en sortie.

Il apparaît à l'homme du métier que, du coup, la signature insérée dans les messages de signalisation sortants ms sont incohérents avec les valeurs de l'ensemble de paramètres considérés. La présente invention paraît donc a priori ne pas fournir le résultat escompté.

Toutefois, l'exemple fourni par la figure 4 permet de comprendre plus en profondeur le fonctionnement d'un élément intermédiaire selon l'invention. Un message de signalisation entre dans l'élément intermédiaire SP avec un ensemble de paramètres P1. L'élément intermédiaire SP calcule la signature S[P1] sur cet ensemble de paramètres P1, puis modifie les paramètres en un second ensemble de paramètres P2 et, finalement, transmet un message de signalisation sortant contenant l'ensemble de paramètre P2 et la signature S[P1].

Ce message de signalisation est alors transmis au même élément intermédiaire SP, soit directement, soit à travers d'autres éléments intermédiaires (non représentés).

Une nouvelle signature s[P2] est alors calculée, et l'élément intermédiaire compare cette signature s[P2] à la signature s[P1] contenue dans un paramètre particulier du message entrant. Ces signatures étant différentes, la boucle n'est pas détectée, alors que l'élément intermédiaire conforme au mécanisme décrit de la RFC 3261 l'aurait alors détecté.

Le message est donc transmis aux moyens de traitement. Mais comme nous sommes dans une situation de boucle, l'ensemble de paramètres P2 n'est pas modifié et le message de signalisation sortant contient donc le même ensemble de paramètres P2, avec la signature s[P2] calculée en entrée.

Lorsque ce message se présente une nouvelle fois en entrée, l'élément intermédiaire détecte cette fois-ci que la signature calculée sur l'ensemble des paramètres P2 du message de signalisation et la signature qu'il contient sont identiques. Il détecte la boucle et peut interrompre le traitement du message.

Il peut alors transmettre un message d'erreurs de détection de boucle, qui remonte le chemin pris par le message de signalisation.

Ainsi, l'élément intermédiaire selon l'invention permet finalement de détecter les boucles. Une boucle supplémentaire est réalisée, mais le coût de cette boucle supplémentaire et du trafic de signalisation inutile qu'elle représente est considéré comme peu pertinent par rapport au gain en ressources de calcul gagné par l'unique calcul de signature.

Selon une mise en oeuvre particulière de l'invention, une optimisation supplémentaire est possible en insérant un marqueur dans les messages sortants et en n'effectuant pas de calcul de signature en l'absence de marqueur l'identifiant au sein du message de signalisation entrant.

Ce mécanisme a été par exemple décrit dans les discussions relatives au draft IETF « droft-campen-sipping-stack-loop-detect-00.txt ».

Il repose sur l'idée que si un message ne contient pas son marqueur, c'est qu'il n'est encore jamais passé par l'élément intermédiaire et donc qu'il ne boucle pas.

Selon l'invention, ce marqueur doit être un marqueur représentatif de l'élément intermédiaire et le représentant de façon univoque au sein du réseau de communication. Dans le cas d'un élément intermédiaire appartenant à un réseau public, il doit donc s'agir d'un marqueur univoque dans l'ensemble de ce réseau public. Il doit donc être alors mondialement unique.

Ainsi, un élément recevant un message contenant un marqueur est à même de déterminer sans ambigüité si le message est passé par lui ou pas.

Le marqueur peut par exemple être basé sur l'adresse physique de l'élément intermédiaire. Il peut s'agir par exemple de son adresse MAC (pour « Media Access Control »). Plusieurs types d'adresses MAC existent et peuvent être utilisés, notamment MAC-48, EUI-48 et EUI-64 définis par l'IEEE *(Institution* of *Electrical and Electronics Engineers).*

Le marqueur peut également être basé sur l'adresse IP de l'élément intermédiaire.

Le marqueur peut être exactement égal à cette adresse physique (MAC ou IP ou autres) ou bien la contenir avec d'autres paramètres, ou bien encore être déduit de l'adresse physique par une traduction qui lui conserve sa caractéristique d'univocité.

Le marqueur peut également être obtenu depuis un serveur de nommage dédié dont le rôle sera d'attribuer des identifiants univoques à l'ensemble des éléments intermédiaires.

Ce marqueur peut être inséré en différents emplacements des messages de signalisation.

Selon un premier mode de réalisation, le marqueur est inséré dans un emplacement standardisé et unique des messages de signalisation (entrants et sortants). Il pourrait s'agir d'un entête spécifique du protocole SIP, normalisé auprès de l'IETF. Toutefois, une telle implémentation nécessite de modifier le parc de terminaux de communication existant afin que ceux-ci soient conformes à celle nouvelle normalisation et soi à même d'interpréter les messages de signalisation reçus et d'en générer eux-mêmes.

L'invention propose donc également un second mode de réalisation demeurant conforme à la normalisation actuelle du protocole SIP et ne nécessitant pas de modifier les terminaux déployés.

Par exemple, le marqueur peut être inséré au sein d'un paramètre particulier du message de signalisation qui, tout comme la signature, peut être le paramètre « branch ».

Il s'agit typiquement du paramètre « branch » du dernier (chronologiquement) entête « Via » de chaque message de signalisation sortant.

Dans certains cas, en outre, certains éléments intermédiaires de signalisation, « proxy » modifient les entêtes « Record Route » et l'acheminement d'un message de réponse dans le réseau de communication se base sur ces entêtes « Record Route ». Dans ces cas-là, le marqueur peut également être inséré dans un paramètre de l'entête « Record route » de chaque message de signalisation sortant.

L'entête « Record-Route » est utilisé par les éléments terminaux SIP pour router les messages subséquents par les noeuds qui en ont fait la demande au chemin aller.

Dans le cas d'un élément de signalisation de type « B2BUA » (« back-*to*-*back* User *Agent »),* le marqueur peut être inséré dans l'entête « To » lorsqu'il adopte le rôle de serveur (UAS pour « *User* Agent *Server* »), et dans l'entête « From » lorsqu'il adopte le rôle de client (UAC pour « User Agent Client).

Le marqueur peut également être inclus dans l'entête « Service Route » par un élément intermédiaire de signalisation ayant le rôle d'un élément S-CSCF dans une architecture IMS. Cet entête « Service Route » est défini dans le RFC 3608 de l'IETF, intitulé « Session Initiation Protocol (SIP) Extension Header Field for Service Route Discovery During Registation » et publié en octobre 2003.

Dans tous ces cas, le marqueur peut être inséré par l'utilisation d'un séparateur (le « ; » selon la grammaire du protocole SIP) et introduit par un mot-clé spécifique (par exemple la chaîne « marker= »). Il peut également être inséré sans usage d'un mot-clé.

Il est à noter que cette optimisation supplémentaire consistant à insérer et vérifier la présence d'un marqueur est applicable également dans le cas où l'on effectue les deux calculs de signature ainsi qu'indiqué dans le RFC 3261.

Dans une variante, il est également possible d'effectuer systématiquement le calcul de signature au sein des moyens de réception RCP, mais de ne déclencher la comparaison uniquement dans le cas où le message entrant « me » ne contient pas le marqueur identifiant l'élément intermédiaire SIP proxy.

## Revendications

1. Élément intermédiaire (SIP Proxy) comportant des moyens de réception (RCP) de messages de signalisation entrantes (me) conformes au protocole SIP provenant d'un réseau de communication (N), des moyens de traitement (TRT) pour fournir des messages de signalisation sortants (ms) à partir desdits messages de signalisation entrantes, et des moyens d'émission (EMS) pour émettre lesdits messages de signalisation sortants (ms) sur ledit réseau de communication (N), les moyens de réception comportant un mécanisme de détection de boucles consistant, pour un message de signalisation entrant, à calculer une signature à partir d'un ensemble de paramètres dudit message de signalisation entrant, et à détecteur une boucle par la comparaison de ladite signature avec des voleurs insérées dans un paramètre particulier dudit message de signalisation entrant, et étant apte à envoyer ledit message de signalisation auxdits moyens de traitement, lorsqu'une boucle n'est pas détectée, et lesdits moyens de traitement étant prévu pour transmettre lesdits messages de signalisation sortant auxdits moyens d'émission, l'élément intermédiaire étant **caractérisé en ce que** lesdits moyens d'émission (EMS) insèrent ladite signature dans ledit paramètre particulier du message de signalisation sortant (ms) correspondant audit message de signalisation entrant (me).

2. Élément intermédiaire selon la revendication précédente, dans lequel ledit paramètre particulier est le paramètre « branch », et ladite signature est une chaîne alphanumérique.

3. Élément intermédiaire selon l'une des revendications précédentes, dans lequel lendit ensemble de paramètres comporte le paramètre « via » à l'exclusion de l'identificateur unique aléatoire.

4. Élément intermédiaire selon la revendication 3, dans lequel ledit ensemble de paramètres est au moins composé de « From », « To », « Call Id », « Route », « Via », « Request 2URI », « Proxy Authorization », « Proxy require », « CSeq ».

5. Élément intermédiaire selon l'une des revendications 1 ou 2, dans lequel ledit ensemble de paramètres est conforme au « draft-ietf-sip-fork-loop-fix-0.4.txt ».

6. Élément intermédiaire selon l'une des revendications précédentes, dans lequel ladite signature est séparée d'autres voleurs dudit paramètre « branch » par un séparateur tel un tiret.

7. Élément intermédiaire selon l'une des revendications précédentes, possédant en outre des moyens pour insérer dans lesdits messagers sortants un marqueur représentatif de lui-même et l'identifiant de façon univoque, et des moyens pour, en l'absence de marqueur identifiant ledit élément intermédiaire ou sein d'un message de signalisation entrant, ne pas effectuer de calcul de signature pour ledit message de signalisation entrant.

8. Élément intermédiaire selon la revendication précédente, dans lequel ledit marqueur est basé sur l'adresse physique dudit élément intermédiaire.

9. Élément intermédiaire selon la revendication 7, dans lequel ledit marqueur est obtenu depuis un serveur de hommage.

10. Architecture de communication, conforme au standard IMS,
comportant une pluralité d'éléments intermédiaires de type P-CSCF, I-CSCF et S-CSCF, **caractérisé en ce qu'**au moins un desdits éléments intermédiaires est conforme à l'une des revendications 1 à 9.

11. Procédé de transmission de messages de signalisation, notamment conformes au protocole SIP, au sein d'un ensemble d'éléments intermédiaires d'un réseau de communication, consistant à ce que chacun des éléments intermédiaires traversés reçoit un message de signalisation entrant, et émettre un message de signalisation sortant, fourni à partir dudit message de signalisation entrant, procédé dans lequel un mécanisme de détection de boucle est mis en oeuvre consistant à calculer une signature à partir d'un ensemble de paramètres dudit message de signalisation entrant, et à détecter une boucle par la comparaison de ladite signature avec des valeurs insérées dans un paramètre particulier dudit message de signalisation entrant, **caractérisé en ce que** ladite signature est insérée dans ledit paramètre particulier du message de signalisation sortant correspondant audit message de signalisation entrant.

12. Procédé selon la revendication précédente, dans lequel ledit paramètre particulier est le paramètre « branch », et ladite signature est une chaîne alphanumérique.

13. Procédé selon l'une des revendications 11 ou 12, dans lequel ledit ensemble de paramètres comporte le paramètre « via » à l'exclusion dé l'identificateur unique aléatoire.

14. Procédé selon la revendication précédente, dans lequel ledit ensemble de paramètres est au moins composé de « From », « To », « Call Id, », « Route », « Via », « Request URI » , « Proxy Authorization », « Proxy require », « CSeq ».

15. Procédé selon l'une des revendications 11 ou 12, dans lequel ledit ensemble de paramètres est conforme au « draft-letf-sip-fork-loop-fix-04.txt »

16. Procédé selon l'une des revendication 13 à 15, dans lequel ladite signature est séparée d'autres valeurs dudit paramètre « branch » par un séparateur tel un tiret.

17. Procédé selon l'une des revendications 11 à 16, dans lequel on insère dans lesdits messages sortants un marqueur représentatif dudit élément intermédiaire et l'identifiant de façon univoque, et, en l'absence de marqueur identifiant ledit élément intermédiaire au sein d'un message de signalisation entrant, on n'effectue pas de calcul de signature pour ledit message de signalisation entrant.

18. Procédé selon la revendication précédente, dans lequel ledit marqueur est basé sur l'adresse physique dudit élément intermédiaire.

19. Procédé selon la revendication 17, dans lequel ledit marqueur est obtenu depuis un serveur de nommage.

## Claims

1. An intermediate element (SIP Proxy) comprising means for receiving (RCP) incoming signaling messages (me) compliant with the SIP protocol coming from a communication network (N), processing means (TRT) for providing outgoing signaling messages (ms) from said incoming signaling messages, and transmission means (EMS) for transmitting said outgoing signaling messages (ms) over said communication network (N), the reception means comprising a loop-detection mechanism consisting, for an incoming signaling message, of calculating a signature based on a set of parameters of said incoming signaling message, and of detecting a loop by comparing said signature with values inserted into a particular parameters of said incoming signaling message, and being capable of sending said signaling message to said processing means, when a loop is not detected, and said processing means being provided to transmit said outgoing signaling messages to said transmission means, the intermediate element being **characterized in that** said transmission means (EMS) insert said signature into said particular parameter of the outgoing signaling message (ms) corresponding to said incoming signaling message (me).

2. An intermediate element according to the preceding claim, wherein said particular parameter is the "branch" parameter, and said signature is an alphanumeric string.

3. An intermediate element according to one of the preceding claims, wherein said set of parameters comprises the "via" parameter, excluding the single random identifier.

4. An intermediate element according to claim 3, wherein said set of parameters comprises at least "From", "To", "Call ld", "Route", "Via", "Request URI", "Proxy Authorization", "Proxy require", "CSeq".

5. An intermediate element according to one of the claims 1 or 2, in which said set of parameters is compliant with "draft-letf-sip-fork-loop-fix-04.txt"

6. An intermediate element according to one of the previous claims, wherein said signature is separated from other values of said "branch" parameter by a separator such as a dash.

7. An intermediate element according to one of the preceding claims, further
possessing means for inserting into said outgoing messages a marker uniquely representative both of itself and of the identifier, and means for, in the absence of a marker identifying said intermediate element within an incoming signaling message, not to calculate a signature for said incoming signaling message.

8. An intermediate element according to the previous claim, wherein said marker is based on the physical address of said intermediate element.

9. An intermediate element according to claim 7, wherein said marker is obtained from a naming server.

10. A communication architecture, compliant with the IMS standard, comprising a plurality of P-CSCF, I-CSCF and S-CSCF type proxies, **characterized in that** at least one of said intermediate elements complies with one of the claims 1 to 9.

11. A method for transmitting signaling messages, particularly compliant with the SIP protocol, within a set of intermediate elements of a communication network, consisting in that each of the traversed intermediate elements receives an incoming signaling message, and transmits an outgoing signaling message, provided from said incoming signaling message, a method in which a loop-detection mechanism is implemented consisting of calculating a signature from a set of parameters of said incoming signaling message, and of detecting a loop by comparing said signature with values inserted into a particular parameter of said incoming signaling message, and being capable of sending said signaling message to said processing means, **characterized in that** said signature is inserted into said particular parameter of the outgoing signaling message corresponding to said incoming signaling message.

12. A method according to the preceding claim, wherein said particular parameter is the "branch" parameter, and said signature is an alphanumeric string.

13. A method according to one of the claims 11 or 12, wherein said set of parameters comprises the "via" parameter to the exclusion of the single random identifier.

14. A method according to the preceding claim, wherein said set of parameters comprises at least "From", "To", "Call Id", "Route", "Via", "Request URI", "Proxy Authorization", "Proxy require", "Cseq".

15. A method according to one of the claims 11 or 12, wherein said set of parameters is compliant with "draft-letf-sip-fork-toop-fix-04.txt"

16. A method according to one of the claims 13 to 15, wherein said signature is separated from other values of said "branch" parameter by a separator such as a dash.

17. A method according to one of the claims 11 to 16, wherein a marker uniquely representative both of said intermediate element and of the identifier is inserted into said outgoing messages, and, in the absence of a marker identifying said intermediate element within an incoming signaling message, to not calculate a signature for said incoming signaling message.

18. A method according to the preceding claim, wherein said marker is based on the physical address of said intermediate element.

19. A method according to claim 17, wherein said marker is obtained from a naming server.

## Patentansprüche

1. Zwischenelement (SIP Proxy), umfassend Empfangsmittel (RCP) für eingehende Signalisierungsnachrichten (me), welche dem SIP-Protokoll entsprechen und von einem Kommunikationsnetzwerk (N) stammen, Verarbeitungsmittel (TRT) zum Bereitstellen von ausgehenden Signalisierungsnachrichten (ms) ausgehend von den besagten eingehenden Signalisierungsnachrichten, und Aussendungsmittel (EMS) zum Senden der besagten ausgehenden Slgnahsierungsnachrichten (ms) auf dem besagten Kommunikationsnetzwerk (N), wobei die Empfangsmittel einen Schleifenerfassungsmechanismus umfassen, welcher dazu bestimmt ist, für eine eingehende Signalisierungsnachricht auf der Basis eines Satzes von Parametern der besagten eingehenden Signalisierungsnachricht eine Signatur zu errechnen und durch das Vergleichen der besagten Signatur mit den in einem bestimmten Parameter der besagten eingehenden Signalisierungsnachricht eingefügten Werten eine Schleife zu erfassen, und welcher dazu ausgelegt ist, die besagte Signalisierungsnschricht an die besagten Verarbeitungsmittel zu senden, wenn keine Schleife erfasst wird, und wobei die besagten Verarbeitungsmittel dazu bestimmt sind, die besagten ausgehenden Signalisierungsnachrichten an die besagten Aussendungsmittel zu übertragen, wobei das Zwischenelement **dadurch gekennzeichnet ist, dass** die besagten Aussendungsmittel (EMS) die besagte Signatur in den besagten bestimmten Parameter der ausgehenden Signalisierungsnachricht (ms), welche der besagten eingehenden Signalisierungsnachnicht (me) entspricht, einzufügen.

2. Zwischenelement nach dem vorstehenden Anspruch, wobei der besagte bestimmte Parameter der Parameter "branch" und die besagte Signatur eine alphanumerische Kette ist.

3. Zwischenelement nach einem der vorstehenden Ansprüche, wobei der besagte Satz von Parametern den Parameter "via" unter Ausschluss der eindeutigen Zufallskennung umfasst.

4. Zwischenelement nach Anspruch 3, wobei sich der besagte Satz von Parametern mindestens aus "From", "To", "Call Id", "Route", "Via", "Request URI", "Proxy Authonzation", "Proxy 5 require", "CSeq" zusammensetzt.

5. Zwischenelement nach einem der Ansprüche 1 oder 2, wobei der besagte Satz von Parametern dem "draft-left-sip-fork-look-fix-04.txt" entspricht.

6. Zwischenelement nach einem der vorstehenden Ansprüche, wobei die besagte Signatur von anderen Werten des besagten Parameters "branch" durch ein Trennzeichen wie beispielsweise einen Trennstrich getrennt ist.

7. Zwischenelement nach einem der vorstehenden Ansprüche, weiterhin umfassend Mittel zum Einfügen eines Markierers, welcher sich selbst darstellt und diesen eindeutig identifiziert, in die besagten ausgehenden Nachrichten, sowie Mittel, um, wenn kein das besagte Zwischenelement identifizierender Markierer in der eingehenden Signalisierungsnachricht enthalten ist, keine Berechnung der Signatur für die besagte eingehende Signalisierungsnachricht durchzuführen.

8. Zwischenelement nach dem vorstehenden Anspruch, wobei der besagte Markierer auf der physischen Adresse des besagten Zwischenelements basiert.

9. Zwischenelement nach Anspruch 7, wobei der besagte Markierer von einem Namensgebungsserver erhalten wird.

10. Kommunikationsarchitektur, welche dem IMS-Standard entspricht, mit einer Mehrzahl von Zwischenelementen vom Typ P-CSCF, I-CSCF et, S-CSCF, **dadurch gekennzeichnet, dass** zumindest eines der besagten Zwischenelemente einem der Ansprüche 1 bis 9 entspricht.

11. Verfahren zum Übertragen von Signalisierungsnachrichten, welche insbesondere dem SIP-Protokoll entsprechen, innerhalb eines Satzes von Zwischenelementen eines Kommunikationsnetzwerks, darin bestehend, dass ein jedes der durchquerten Zwischenelemente eine eingehende Signalisierungsnachricht empfängt, und zum Senden einer ausgehenden Signalisierungsnachricht, welche ausgehend von der besagten eingehenden Signalisierungsnachricht bereitgestellt wird, wobei das Verfahren einen Schleifenerfassungsmechanismus implementiert, welcher dazu bestimmt ist, ausgehend von einem Satz von Parametern der besagten eingehenden Signalisierungsnachricht eine Signatur zu berechnen und durch das Vergleichen der besagten Signatur mit den in einem bestimmten Parameter der besagten eingehenden Signalisierungsnachricht eine Schleife zu erfassen, **dadurch gekennzeichnet, dass** die besagte Signatur in den besagten bestimmten Parameter der ausgehenden Signalisierungsnachricht, welche der besagten eingehenden Signalisierungsnachricht entspricht, eingefügt wird.

12. Verfahren nach dem vorstehenden Anspruch, wobei der besagte bestimmte Parameter der Parameter "branch" ist, und die besagte Signatur eine alphanumerische Kette ist.

13. Verfahren nach einem der Ansprüche 11 oder 12, wobei der besagte Satz von Parametern den Parameter "via" unter Ausschluss der eindeutigen Zufallskennung umfasst.

14. Verfahren nach dem vorstehenden Anspruch, wobei sich der besagte Satz von Parametern mindestens aus "From", "To", "Call Id", "Route", "Via", "Request URI" "Proxy Authorization", "Proxy require", "CSeq" zusammensetzt.

15. Verfahren nach einem der Ansprüche 11 oder 12, wobei der besagte Satz von Parametern dem "draft-ietf-sip-fork-loop-fix-04.txt" entspricht.

16. Verfahren nach einem der Ansprüche 13 bis 15, wobei die besagte Signatur von anderen Werten des besagten Parameters "branch" durch ein Trennzeichen wie beispielsweise einen Trennstrich getrennt ist.

17. Verfahren nach einem der Ansprüche 11 bis 16, wobei man in die besagten ausgehenden Nachrichten einen das besagte Zwischenelement darstellenden und dieses eindeutig identifizierenden Markierer einfügt und, wenn kein das besagte Zwischenelement darstellender Markierer in einer eingehenden Signalisierungsnachricht enthalten ist, man keine Berechnung der Signatur für die besagte eingehende Signalisierungsnachricht durchführt.

18. Verfahren nach dem vorstehenden Anspruch, wobei der besagte Markierer auf der physischen Adresse des besagten Zwischenelements basiert.

19. Verfahren nach Anspruch 17, wobei der besagte Markierer von einem Namensgebungsserver erhalten wird.
